# EUROPEAN PATENT SPECIFICATION

(11) **EP 0 360 856 B1**
(45) Date of publication and mention of the grant of the patent: **09.11.1994**
(21) Application number: 89903624.8
(22) Date of filing: 24.02.1989
(51) Int. Cl.: B05B 7/12, B05B 7/04, B01J 8/00, C01B 21/00

(54) **PROCESS FOR REDUCING THE CONCENTRATION OF POLLUTANTS IN AN EFFLUENT**
VERFAHREN ZUR ERMÄSSIGUNG DER KONZENTRATION VON SCHADSTOFFEN IN ABGASEN
PROCEDE REDUISANT LA CONCENTRATION DE POLLUANTS DANS UN EFFLUENT

(30) Priority: 26.02.1988 US 160684
(43) Date of publication of application: 04.04.1990
(73) Proprietor: FUEL TECH, INC., Stamford, CT 06906 (US)
(72) Inventor: DEVITA, Vincent, A., Stamford, CT 06902 (US)
(74) Representative: VOSSIUS & PARTNER
(86) International application number: US8900761
(87) International publication number: WO8907982

(56) References cited:
- WO-A-88/05762
- US-A- 500 005
- US-A- 2 117 270
- US-A- 2 737 374
- US-A- 3 050 262
- US-A- 3 141 615
- US-A- 3 236 459
- US-A- 3 239 960
- US-A- 3 242 098
- US-A- 3 299 940
- US-A- 3 326 578
- US-A- 3 443 755
- US-A- 4 119 702
- US-A- 4 501 722
- US-A- 4 555 059
- US-A- 4 555 996
- US-A- 4 719 092
- US-A- 4 726 934
- US-A- 4 751 065
- US-A- 4 770 863
- US-A- 4 777 024
- US-A- 4 780 289

## Description

The present invention relates to a process for the reduction of pollutants, such as nitrogen oxides in an effluent, generated by the combustion of carbonaceous fuels and waste materials.

An effluent treatment system designed for maximum pollutant removal will use a staged injection system in which treatment fluids are injected at several different points in the path of the combustion effluent. This is disclosed in U.S. Patent Applications Serial No. 022,716 (corresponding to EP-A- 0 306 515) entitled "Multi-Stage Process for Reducing the Concentration of Pollutants in an Effluent," and Serial No. 050,198 (corresponding to EP-A- 0 313 648) titled "Process for Nitrogen Oxides Reduction and Minimization of the Production of Other Pollutants,". Each stage will have different treatment fluid requirements as the pollutant concentration and effluent temperature varies as the effluent progresses through the combustion chamber and past several heat exchangers. Each stage of a treatment system requires a treatment fluid and treatment fluid injector appropriate for the treatment fluid flow rate and the conditions of the combustion chamber.

A particular problem encountered in designing injector systems for certain locations is providing a uniform distribution of treatment fluid across the path of the effluent. In a typical retrofit application, an injector should be able to generate droplets in a selected size range and distribute them uniformly across the boiler cross-section.

Uniform distribution of treatment fluid is most difficult to achieve where relatively low flow rates of treatment fluid are being injected, for example, in the third or fourth stage of a treatment system, where there may be fewer pollutants in the effluent stream. In this situation, it is necessary to contact a sufficient amount of treatment fluid with all of the effluent to reduce the pollutants, yet not to saturate even a portion of the gas stream with chemicals which could increase the pollutant level instead of reacting with the pollutants to reduce emissions. For example, a urea treatment fluid if injected in excessive quantities can cause excessive ammonia in the effluent stream. In prior art injectors such as a pin jet injector used to provide high penetration by a small jet of chemicals at low treatment fluid flow rates there can be a poor dispersion of the treatment fluid across the effluent path and particularly near the effluent passage wall from which the injector extends.

The problems facing the successful method for injecting such compositions into an effluent are many. For instance, the heat of the effluent can readily cause a loss in structural integrity of most nozzles or their supports. When the composition to be injected is a solution, often precipitated solute will collect at the end of the nozzle and can plug the nozzle. A plugged nozzle on a treatment fluid injector is not merely an inconvenience: such plugging can render a treatment system ineffective, such that the combustion system does not comply with environmental regulations, necessitating the shut down of production facilities and the loss of time and money. Furthermore, the precipitated solute can break off as chunks and damage the interior of the boiler. Variability of droplet size, degree of dispersion and depth of penetration must be provided for by an injector, depending on the boiler configuration or boiler load. These problems have not been successfully addressed by the prior art.

The prior art relating to injection apparati and nozzles shows that such injection apparati are usually designed for a specific fluid and environment of use. Typically, the prior art teaches mixing of a liquid with an atomizing fluid at or near a nozzle tip, with the liquid being injected into the atomizing fluid at a point concentric within the atomizing fluid conduit. This external mixing of a liquid and atomization fluid can reduce clogging problems. However, this type of design does not allow for deep penetration of a broad band of droplet sizes into a chamber at low liquid flow rates. For example, U.S. Patent No. 1,625,098 (an atomizing cleaner), U.S. Patent No. 3,876,150 (a paint spray nozzle), and U.S. Patent No. 1,965,465 (a liquid fuel burner) show this type of injector layout.

An internal mix injector nozzle, in which a liquid contacts an atomizing fluid before exiting from the nozzle tip, can give a finer control over penetration at low liquid flow rates. However, commercially available internal mix injector nozzles are extremely prone to rapid clogging in a combustion chamber application due to the precipitation of treatment chemicals in the nozzle.

U.S. Patent No. 3,050,262 relates to a nozzle for producing fog or mist. The nozzle comprises an L-shaped tubular conduit through which an atomization fluid flows. Because of the shape of the conduit, the flow of atomization fluid through the horizontally aligned segment is in a swirling motion. A liquid is fed into the flow of atomization fluid in the vertically aligned segment of the conduit so as to be entrained by the airflow and swirled about the horizontal segment, after which it is injected in the desired area.

U.S. Patent No. 4,726,934 discloses a carbon black burner which aims at reducing grit content of a carbon black product. The burner contains, as an integral element thereof, a series of cross passages which engulf a feedstock oil through a central passage of the burner. This arrangement is aimed at producing carbon black in a superior manner.

The prior art thus does not teach a process for treating pollutants in an effluent stream suitable for heavy duty use as in a combustion chamber and effluent passage, and which is useful for uniform delivery at low treatment fluid rates.

There exists a present need, therefore, for an injection process for injecting a treatment fluid, e.g., an aqueous solution of a NOₓ reducing composition into an effluent of the combustion of a carbonaceous fuel, which provides both good dispersion and penetration of injection fluid, and which reduces or eliminates plugging problems in an injector.

This need is fulfilled by the process according to the present invention.

A process for reducing the concentration of pollutants, such as nitrogen oxides, in an effluent from the combustion of a carbonaceous material is presented. The process comprises: positioning an injector within an effluent passage, where the injector includes an atomization conduit having an injector nozzle and at least one jet penetrating the wall of the atomization conduit upstream of the nozzle, and a supply conduit; supplying through the supply conduit and through the at least one jet an effluent treatment fluid; and supplying a carrier and atomization fluid through the atomization conduit to inject the solution into the effluent passage and preferably to effect further atomization of the solution prior to injection.

Preferably, the supply conduit is coaxial with and disposed around the atomization conduit. The at least one jet in preferably located upstream of the nozzle end at a distance equal to up to about thirty-two times the inner diameter of the atomization conduit, and most preferably at a distance equal to about five to sixteen times the inner diameter of the atomization conduit. Preferably there are two or more of such jets and most preferably there are two jets. The treatment fluid preferably comprises an acqueous solution of urea, ammonia, nitrogenated hydrocarbon, oxygenated hydrocarbon, hydrocarbon or combinations thereof.

An injector apparatus for carrying out the process of the present invention preferably comprises: a) means for providing an atomization fluid, having a nozzle for extending into an effluent passage; b) means for supplying an effluent treatment fluid to the effluent passage, and c) the treatment fluid supplying means being connected to the atomization fluid providing means by at least one jet upstream of the nozzle.

Preferably, the means for providing an atomization fluid comprises an atomization conduit and the at least one jet penetrates the wall of the atomization conduit. The means for supplying an effluent treatment fluid preferably comprises a supply conduit coaxial with and disposed around the atomization conduit. There are preferably two or more such jets, each being located in the atomization conduit upstream of the nozzle at a distance equal to up to about thirty-two times the inner diameter of the atomization conduit, and most preferably at a distance equal to about five to sixteen times the inner diameter of the atomization conduit. Most preferably, the two jets are oriented such that the treatment fluid streams entering the atomization conduit impinge on each other, further enhancing droplet formation. The atomization fluid is preferably provided in a flow of between about 200 to about 800 feet per second (about 61 to about 244 m/s), and the effluent treatment fluid is supplied through the jets at a velocity of between about two to about sixty feet per second (about 0.61 to about 18.3 m/s).

The present invention will be better understood and its advantages more apparent in view of the following detailed description, especially when read with reference to the appended drawings, wherein:
FIGURE 1 is an installation schematic in perspective, partially broken away, of an apparatus disposed in a utility boiler;
FIGURE 2 is a side elevation view, partially broken away of the apparatus;
FIGURE 3 is a cross-sectional view of the apparatus taken across line 3-3 of FIGURE 2;
FIGURE 4 is a front end view of the supply and atomization conduits;
FIGURE 5 is a side elevation view of an alternate embodiment of the apparatus; and
FIGURE 6 is a front cross-sectional view, taken along line 6-6 of FIGURE 5.

As used herein, the term "front" refers to the end of the apparatus which extends into the effluent; the term "rear" refers to the end of the apparatus from which the fluids and solutions may be supplied. Although this description is written in terms of the reduction of the nitrogen oxides concentration in an oxygen-rich effluent, it will be recognized that the apparatus is equally applicable to any situation requiring the injection of an atomized fluid into a high temperature environment. Moreover, it will further be recognized that some or all of the Figures are schematic representations for purposes of illustration and do not necessarily depict the actual relative sizes or locations of the elements shown.

The process of the invention enables reduction of the concentration of nitrogen oxides, or other pollutants, in effluents from the combustion of a carbonaceous materials, including fuel per se and waste materials. Representative fuels are fuel oil, gas, coal, lignite and the like.

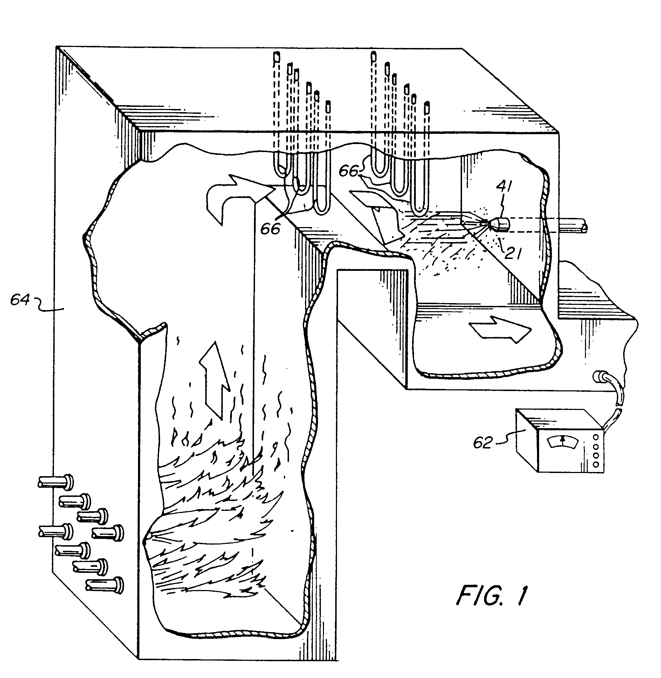

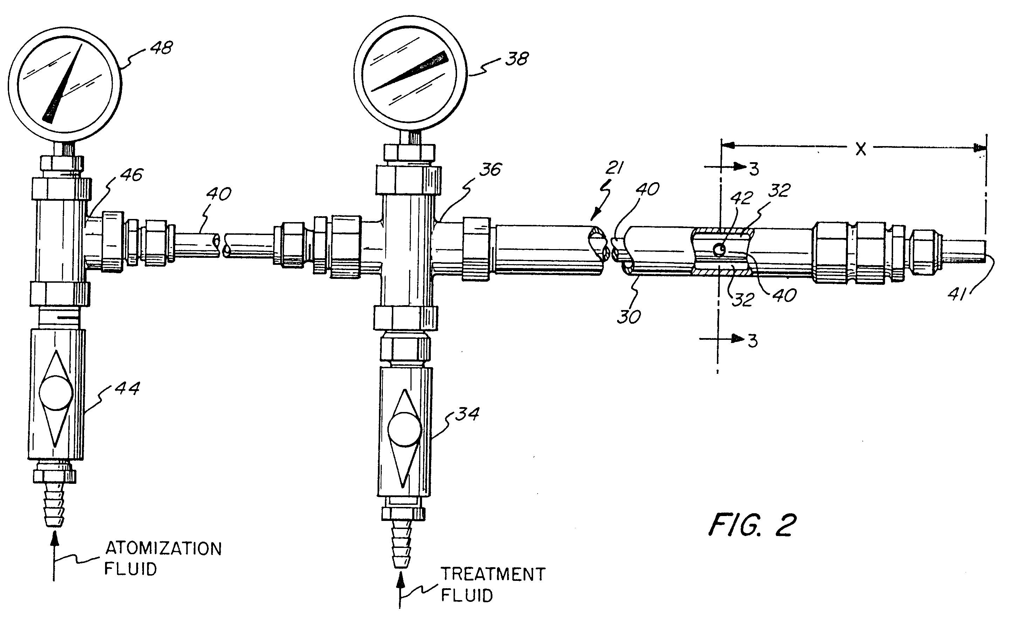

As illustrated in FIGURES 1-4 the apparatus comprises a injector 21 comprising a supply conduit 30 which is operable to supply and inject a treatment fluid, such as a solution, through an annular space 32 into a high temperature environment, such as the effluent stream of a utility boiler 64. Supply conduit 30 may be any suitable conduit for this purpose and is advantageously a seamless tube of a temperature and corrosion resistant material such as a metal, especially temperature-resistant stainless steel. The treatment fluid to be injected through supply conduit 30 is supplied by any conventional supply or pumping device (not shown), as would be familiar to the skilled artisan, and is preferably supplied through a metering device to allow careful control of the amount of fluid injected. For example, treatment fluid may be supplied by valve 34 to fitting 36 having a pressure gauge 38 for monitoring the treatment fluid delivery pressure.

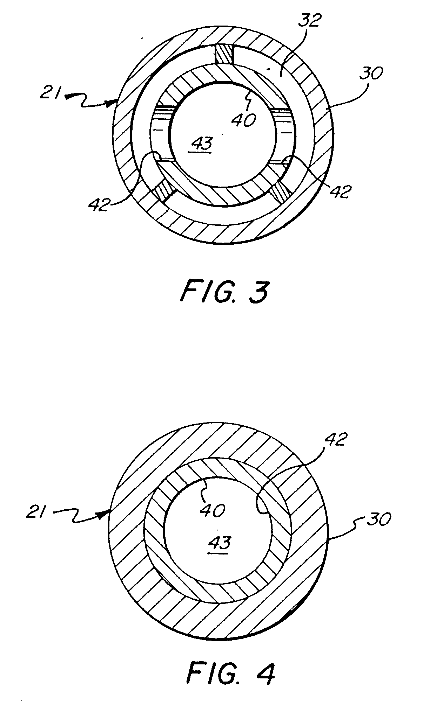

Injector 21 further comprises an atomization conduit 40, as illustrated in FIGURE 3, for supply of a carrier and atomization fluid therethrough. Atomization conduit 40 may be any suitable conduit operable to supply atomization fluid and is advantageously a seamless tube of a temperature resistant material such as a metal, especially temperature-resistant stainless steel. The carrier and atomization fluid to be supplied through atomization conduit 40 may be any fluid operable to act as a carrier for treatment fluid droplets and preferably to cause atomization of the treatment fluid supplied through supply conduit 30. Supply conduit 30 is preferably coaxial with and disposed around atomization conduit 40, although the invention may also be practiced using separate, non-concentric conduits.

At least one jet 42 penetrates the walls of atomization conduit 40 for feeding treatment fluid to space 43 in the atomization conduit 40 from the supply conduit 30. Preferably there are two or more such jets 42. Most preferably there are two such jets 42 located on opposite sides of atomization conduit 24. In the preferred embodiment, jets 42 are located such that the streams of treatment fluid impinge on each other in space 43. Although jets 42 are shown as simple orifices in the walls of atomization conduit 40, it is to be understood that jets 42 may be any type of communicating conduit between supply conduit 30 and atomization conduit 40.

Atomization is primarily a function of velocity of the treatment fluid as it passes through the jets 42. Atomization is enhanced by locating jets 42 so that treatment fluid streams passing therethrough impinge on each other, and further by the force of atomization fluid contacting the treatment fluid as it exits from jets 42. The velocity of treatment fluid through jets 42 can be varied by using jets of different sizes, by varying the pressure of the treatment fluid supplied to the jets 42 and by varying the flow rate of the atomization fluid. The force of atomization fluid contacting the treatment fluid can be varied by varying the flow of atomization fluid through atomization conduit 40, for instance by means of valve 44.

Typically, the carrier and atomization fluid is steam or a gas, such as air, which is supplied to atomization conduit 40 from conventional means (not shown) through, illustratively, valve 44 and fitting 46, the flow of which may be measured by gauge 48. Most preferably, the atomization fluid is steam. The atomization fluid is preferably provided at a gauge pressure of about five to about twenty pounds per square inch (about 34.5· 10³ to about 138· 10³ Pa) at flow rates from about 200 to about 800 feet per second (about 61 to about 244 m/s). The treatment fluid is advantageously supplied at a flow rate and pressure which is higher than that of the pressure in the atomization conduit, and should be supplied at a pressure sufficient to produce a flow of treatment fluid through jets 42 at a velocity of between about two to about sixty feet per second (about 0.61 to about 18.3 m/s); usually the treatment fluid will be supplied at a gauge pressure of about 10 to about 100 pounds per square inch (about 69· 10³ to about 690· 10³ Pa). At this velocity, atomization of the treatment fluid takes place immediately upon introduction into the atomization conduit 40. Atomization is enhanced if the jets 42 are located so that the streams of treatment fluid passing through jets 42 impinge on each other. The carrier and atomization fluid also enhances atomization when supplied at higher velocitites.

The carrier and atomization fluid will preferably project at least a portion of the droplets of treatment fluid to a distance of at least about 75% of the width of the flue gas passage at the point of injection, as illustrated in FIGURE 1. Where it is feasible to position injectors on two sides of the flue gas passage, it is preferable that the injection extend only to about 50% of the width of the flue gas passage.

In selecting the size of jets 42, the practitioner must provide a jet large enough to allow a sufficient flow of treatment fluid to treat the effluent, and small enough so that the fluid velocity will be in the range of about two to about sixty feet per second (about 0.61 to about 18.3 m/s). It has been found that for 1/2 inch (about 12.7 mm) diameter atomization conduit having a 3/8 inch (about 9.5 mm) inner diameter, that the diameter of jets 42 should be in the range of about 1/32 to about 1/4 inch (about 0.8 to about 6.35 mm).

The dispersion of treatment fluid throughout the effluent is a function of the distance of the jets 42 to the nozzle tip 41 and of the force of the atomization fluid contacting the treatment fluid as it exits the jets 42. For example, a narrow dispersion may be obtained by locating jets 42 upstream of the nozzle tip 41 at a distance X equal to about thirty-two times the inner diameter of the atomization conduit 40. This jet to nozzle distance provides a narrow stream of treatment fluid similar to that provided by a pin jet; the depth of penetration of the stream can be varied by varying the atomization fluid flow rate. If distance X is selected to be equal to about sixteen times the inner diameter of the atomization conduit 40, a spray pattern in still air which has a conical first spray section adjacent the nozzle consisting primarily of small droplets and a cylindrical second spray section further away from the nozzle consisting of larger droplets is provided. A very broad spray pattern with a short travel is obtained by locating jets 42 adjacent to the nozzle tip 41.

If desired by the practitioner, as illustrated in FIGURE 4, injector 21 may be provided with alignment tabs 23 to maintain atomization conduit 40 centrally disposed within supply conduit 30. Alignment tabs 23 may be placed intermittently along the length of atomization conduit 40. Alignment tabs 23 are preferably disposed on either the inside of supply conduit 30 or, more preferably, the outside of atomization conduit 40 and are advantageously attached by welding.

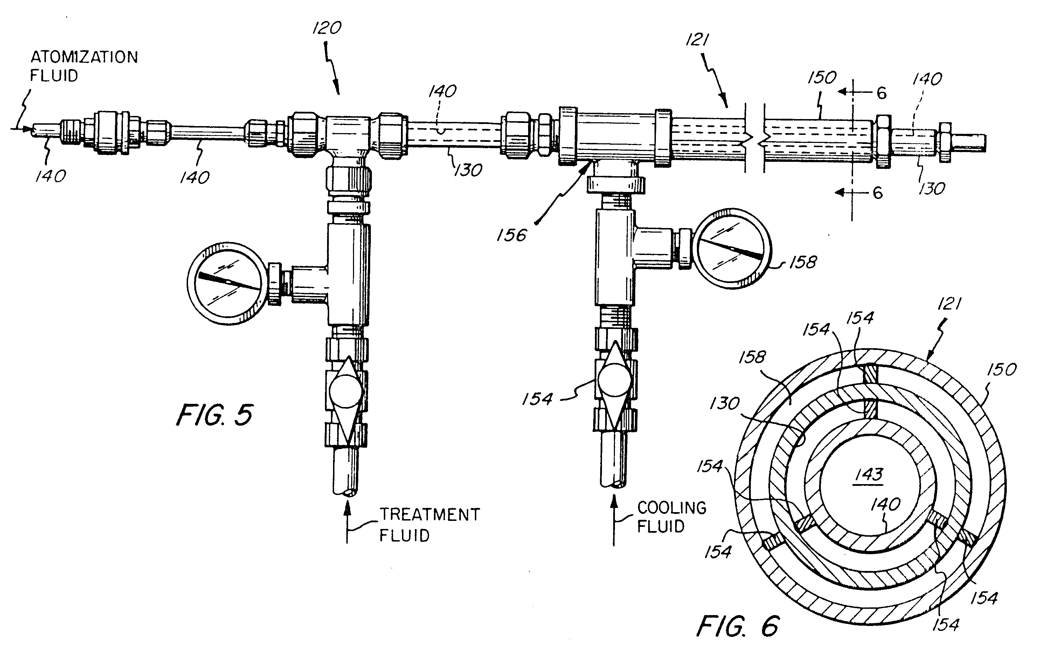

In an alternate embodiment 120, injector 121 is provided with a cooling conduit 150 disposed outside of and around a portion of supply conduit 130. An appropriate cooling fluid such as air, water or steam may be circulated in annular space 158, to maintain the cooling of both atomization and supply conduits 140 and 130 in the high temperature environment of a boiler. Cooling fluid may be supplied to cooling conduit 150 from a suitable source (not shown) through, illustratively, appropriate valve 154 and fitting 156, and measured by gauge 158, as would be familiar to the skilled artisan. As desired, alignment tabs 154 may also be provided between atomization conduit 130 and cooling conduit 150 as illustrated in FIGURE 6.

A significant advantage is that the injector may provide a broad dispersion of droplets, i.e., a fog, as well as providing a range of droplet sizes. In addition, the flow of atomization fluid serves to prevent any particles from precipitating from the treatment fluid and collecting in the atomization conduit 40 where they might clog injector 21 and/or break off as a chunk and cause damage to the inside of the boiler. The flow of atomization fluid also serves to cool supply conduit 30 to reduce the chances of supply conduit failure.

The treatment fluid to be injected typically comprises a solution having at least one additive compound effective in reducing NOₓ and/or SOₓ under the conditions of injection. The temperature of the effluent at the point of injection, the concentration of the additive compound in the solution, and the size of the droplets in the dispersion, are selected to achieve reduction in nitrogen oxide or other pollutant levels in the effluent. The invention provides for treating higher temperature effluents in the range of about 1350°F to about 2200°F (about 732°C to about 1204°C) by injecting an urea, ammonia or a nitrogenated hydrocarbon treatment solution, such as those disclosed and described in U.S. Patent Application Serial Number 784,826 (corresponding to EP-A- 0 238 654) entitled "Reduction of Nitrogen and Carbon-Based Pollutants Through the Use of Urea Solutions", and in U.S. Patent Application, Serial Number 906,671 (corresponding to EP-A-0 237 568) entitled "Reduction of Nitrogen-and Carbon-Based Pollutants Through the Use of Urea Solutions Containing Oxygenated Hydrocarbon Solvents", and in U.S. Application No. 039,013 (corresponding to EP-A-0 309 570) titled "Process for the Reduction of Nitrogen Oxides in An Effluent Using A Hydroxy Amino Hydrocarbon.", and in U.S. Application No. 100,128 (corresponding to EP-A- 0 333 833) titled "Process for the Reduction of Nitrogen Oxides In An Effluent", and in U.S. Application No. 090,962 (corresponding to WO 88/06407) titled "Process for the Reduction of Nitrogen Oxides in an Effluent". In addition, such solutions may also include an enhancer such as hexamethylenetetramine and/or ethylene glycol and/or an oxgenated hydrocarbon as taught by U.S. Patent Application Serial Number 811,532 (corresponding to WO 87/02023) titled "Reduction of Nitrogen- and Carbon-Based Pollutants", and U.S. Patent Application No. 014,431 (corresponding to EP-A- 0 301 085) entitled "Process for the Reduction of Nitrogen Oxides in an Effluent", and U.S. Patent No. 4,719,092. Another embodiment of the invention provides for treating lower temperature effluents, in the range of about 800°F to about 1400°F (about 427°C to about 760°C) by injecting a hydrocarbon, such as ethylene glycol, furfural or hydrogen peroxide, as taught by U.S. Patent Application No. 022,799 (corresponding to EP-A-0304478) titled "Process for Reducing Nitrogen Oxides in an Effluent Using a Hydro-carbon or Hydrogen Peroxide".

The concentration of the additive compound or compounds within the effluent should be sufficient to provide a reduction in nitrogen oxide, sulfur oxide, or other designated pollutants. Typically, in the case of a urea, ammonia, or nitrogenated hydrocarbon solution for lowering NOₓ, the active compound will be employed at a molar ratio of nitrogen in the additive compound to the baseline nitrogen oxide level in the effluent of about 1:10 to 5:1, and will more preferably be within the range of about 1:4 to 3:2. In the case of a hydrocarbon solution, the active compound will be employed to provide a weight ratio of hydrocarbon in the treatment fluid to the nitrogen oxide level in the effluent of about .05:1 to about 25:1. The exact concentration of this component, however, will depend upon the overall economics of the process, and must further take into account the size of the droplets, the ability of the injector to uniformly disperse the droplets, and the life of the droplets within the effluent under the high temperature conditions existing therein.

When sulfur-containing fuels are burned, and the effluent is treated with urea for NOₓ reduction, it is important to reduce the level of ammonia in the final effluent by employing an oxygenated material, especially an oxygenated hydrocarbon, preferably as part of the urea solution as taught in U.S. Patent Application, Serial Number 784,828 (corresponding to EP-A-0 242 394),. Free ammonia may otherwise react with the sulfur-containing combustion products to produce ammonium sulfate and/or bisulfate which precipitate as a solid and can rapidly reduce the efficiency of the heat exchange apparatus associated with the boiler; furthermore, any unreacted ammonia is itself an undesirable effluent component.

The injector of the present invention is particularly useful in treating lower temperature effluents in the range of about 800°F to about 1400°F (about 427°C to about 760°C) using a hydrocarbon or oxygenated hydrocarbon treatment fluid as disclosed in U.S. Application No. 022,799 (corresponding to EP-A-0304478).

Aqueous solutions are typical due to their economy and can be employed with suitable effectiveness in many situations. The effective solutions will vary from saturated to dilute. While water will be an effective solvent for most applications, there are instances where other solvents may be advantageous in combination with water.

The treatment fluid should be dispersed uniformly within the effluent stream at a point where the effluent is at a temperature effective for pollutant reduction employing the desired additive at a particular concentration and droplet size.

Preferably, treatment fluid is injected at a number of spaced positions in a manner effective to uniformly form and disperse droplets of treatment fluid within the flowing effluent stream to achieve uniform mixing.

The use of the process the present invention in a multistage effluent treatment system is shown in the following example:

### Example 1

A utility boiler, shown schematically in FIGURE 1, as 64, is fired with brown coal at a supply rate equal to about 145 MW of generated electricity, with an excess of oxygen off 7%. A flue gas monitor 62 having a probe located adjacent the exit of the effluent passage measures the concentration of pollutants in the effluent.

An injector 21 of the present invention, comprising: an atomization conduit having a 1/2 inch (about 12.7 mm) diameter and a 3/8 inch (about 9.5 mm) inner tube diameter, with two jets 42 each 1/8 inch (about 3.2 mm) in diameter penetrating the atomization conduit six inches (about 152 mm) upstream of the nozzle tip 41, and a supply conduit having an inner diameter of 3 inches (about 76 mm) coaxial with and disposed around the atomization conduit, is inserted through a port in the boiler wall. The injector is inserted such that the nozzle end 21 extends about 12 inches (about 305 mm) into the interior of the effluent passage. The point of insertion corresponds to that shown in FIGURE 1, downstream of boiler tubes 66, where the temperature is determined to be 1184°F (about 640°C).

A treatment fluid comprising a mixture of ethylene glycol and molasses is prepared and injected through the injector of the present invention, using air as an atomization fluid supplied at the rate of about 14 SCFM (about 0.396 m³/min), as determined by a flow meter, at a velocity of about 470 feet per second (about 143 m/s). The treatment fluid is provided at a rate of about 200 gallons per hour (about 757 ℓ/h) and passes through jets 42 at a linear velocity of about 44 feet per second (about 13.4 m/s).

The spray pattern of the injected solution shows a conical first section having a dispersion angle of about 20 degrees and which extends for about five feet (1.52 m/s) from the tip of the nozzle into the effluent passageway, and a cylindrical second section which extends beyond the first conical section to about five feet (1.52 m/s). The NOₓ concentration in the effluent is reduced from 120 to 107 ppm, a reduction of 11%.

While a preferred embodiment of the present invention has been described above and illustrated in the accompanying drawings, it is understood that other embodiments are within the contemplation of the inventor and the invention is not limited to the embodiments shown, but determined solely by the appended claims. In particular, the present invention may be used to treat effluents in high temperature and high pollutant zones as well as in lower temperature and lover pollutant zones.

## Claims

1. A process for reducing the concentration of pollutants in an effluent from the combustion of carbonaceous material, the process comprising:
a) positioning an injector (21) within an effluent passage, said injector including
i) an atomization conduit (40) having an injector nozzle (41) at one end thereof and having at least one jet (42) penetrating the wall of said atomization conduit upstream of said nozzle, and
ii) a supply conduit (30) for supplying an effluent treatment fluid to said at least one jet;
b) supplying through said supply conduit and through said at least one jet an effluent treatment fluid effective to reduce pollutants in said effluent; and
c) supplying a carrier and atomization fluid through said atomization conduit to inject said effluent treatment fluid into said effluent passage.

2. A process according to claim 1 wherein said effluent treatment fluid comprises as an additive urea, ammonia, or a nitrogenated hydrocarbon in amounts sufficient to supply a molar ratio of nitrogen in the treatment fluid to nitrogen oxides in said effluent of about 1:10 to about 5:1.

3. A process according to claim 1 wherein said effluent treatment fluid comprises as an additive a hydrocarbon in amounts sufficient to provide a weight ratio of hydrocarbon in said treatment fluid to nitrogen oxides in said effluent of about 0.5:1 to about 25:1.

4. A process according to any of claims 1 to 3 wherein the said at least one jet (42) is located upstream of said nozzle (41) at a distance equal to up to about thirty-two times the inner diameter of said atomization conduit (40).

5. A process according to any of claims 1 to 4 wherein the said at least one jet (42) is located upstream of said nozzle (41) at a distance equal to about five to about sixteen times the inner diameter of said atomization conduit (40).

6. A process according to any of claims 1 to 5 wherein the supply conduit (30) is coaxial with said atomization conduit (40).

7. A process according to any of claims 1 to 6 wherein said effluent treatment fluid is supplied through said at least one jet (42) at a velocity of between about two to about sixty feet per second (about 0.61 to about 18.3 m/s).

8. A process according to any of claims 1 to 7 wherein there are two or more of said jets (42) located such that streams of said treatment fluid passing through said jets impinge on each other.

9. A process according to any of claims 1 to 8 wherein said at least one jet (42) has a diameter of between about 1/32 to about 1/4 inch (about 0.8 to about 6.35 mm).

10. A process according to any of claims 1 to 9 wherein said atomization fluid comprises steam or air, and wherein said atomization fluid is supplied at a velocity of about 200 to about 800 feet per second (about 61 to about 244 m/s).

11. A process according to any of claims 1 to 10 wherein said atomization fluid is supplied at a velocity sufficient to effect atomization of said treatment fluid.

## Patentansprüche

1. Verfahren zur Ermäßigung der Konzentration von Schadstoffen in einem Abgas aus der Verbrennung von kohlenstoffhaltigem Material, wobei das verfahren aufweist:
a) Positionieren eines Injektors (21) in einem Abgasdurchgang, wobei der Injektor aufweist:
i) ein Zerstäubungsrohr (40) mit einer Einspritzdüse (41) an einem seiner Enden und mit mindestens einem Strahlrohr (42), welches die Wand des Zerstäubungsrohres stromaufwärts der genannten Düse durchsetzt, und
ii) ein Zuleitungsrohr (30) zur Zufuhr eines Abgasbehandlungsfluids an das mindestens eine Strahlrohr;
b) Zufuhr eines zur Ermäßigung von Schadstoffen in dem Abgas wirksamen Abgasbehandlungsfluids durch das Zuleitungsrohr und das mindestens eine Strahlrohr; und
c) Zufuhr eines Träger- und Zerstäuberfluids durch das Zerstäubungsrohr, um das Abgasbehandlungsfluid in den Abgasdurchgang einzuspritzen.

2. Verfahren nach Anspruch 1, wobei das Abgasbehandlungsfluid als Zusatz Harnstoff, Ammoniak oder einen stickstoffhaltigen Kohlenwasserstoff in Mengen aufweist, die ausreichen, ein molares Verhältnis von Stickstoff in dem Behandlungsfluid zu Stickstoffoxiden in dem Abgas von etwa 1:10 bis etwa 5:1 zu liefern.

3. Verfahren nach Anspruch 1, wobei das Abgasbehandlungsfluid als Zusatz einen Kohlenwasserstoff in Mengen aufweist, die ausreichen, ein Gewichtsverhältnis von Kohlenwasserstoff im Abgasbehandlungsfluid zu Stickstoffoxiden in dem Abgas von etwa 0,5:1 bis etwa 25:1 zu liefern.

4. Verfahren nach einem der Ansprüche 1 bis 3, wobei das mindestens eine Strahlrohr (42) sich in einem Abstand stromaufwärts der Düse (41) befindet, der bis zu etwa zweiunddreißigmal gleich dem Innendurchmesser des Zerstäubungsrohres (40) ist.

5. Verfahren nach einem der Ansprüche 1 bis 4, wobei das mindestens eine Strahlrohr (42) sich in einem Abstand stromaufwärts der Düse (41) befindet, der etwa fünf- bis etwa sechzehnmal gleich dem Innendurchmesser des Zerstäubungsrohres (40) ist.

6. Verfahren nach einem der Ansprüche 1 bis 5, wobei das Zuleitungsrohr (30) koaxial mit dem Zerstäubungsrohr (40) ist.

7. Verfahren nach einem der Ansprüche 1 bis 6, wobei das Abgasbehandlungsfluid durch das mindestens eine Strahlrohr (42) mit einer Geschwindigkeit zwischen etwa zwei und etwa sechzig Fuß pro Sekunde (etwa 0,61 bis etwa 18,3 m/s) geliefert wird.

8. Verfahren nach einem der Ansprüche 1 bis 7, wobei zwei oder mehr der Strahlrohre (42) derart angeordnet sind, daß durch die Strahlrohre tretende Ströme des Behandlungsfluids aufeinanderprallen.

9. Verfahren nach einem der Ansprüche 1 bis 8, wobei das mindestens eine Strahlrohr (42) einen Durchmesser von etwa 1/32 bis etwa 1/4 Inch (etwa 0,8 bis etwa 6,35 mm) hat.

10. Verfahren nach einem der Ansprüche 1 bis 9, wobei das Zerstäubungsfluid Dampf oder Luft aufweist und wobei das Zerstäubungsfluid mit einer Geschwindigkeit von etwa 200 bis etwa 800 Fuß pro Sekunde (etwa 61 bis etwa 244 m/s) geliefert wird.

11. Verfahren nach einem der Ansprüche 1 bis 10, wobei das Zerstäubungsfluid mit einer Geschwindigkeit geliefert wird, die ausreicht, die Zerstäubung des Behandlungsfluids zu bewirken.

## Revendications

1. Procédé de réduction de la concentration de polluants dans un effluent provenant de la combustion de matière carbonée, ledit procédé comprenant :
a) le positionnement d'un injecteur (21) dans un passage d'effluent, ledit injecteur comprenant :
(i) un conduit d'atomisation (40) comportant un ajutage d'injecteur (41) à une de ses extrémités et comportant au moins un éjecteur (42) pénétrant la paroi du conduit d'atomisation susdit en amont de l'ajutage, et
(ii) un conduit d'amenée (30) pour amener un fluide de traitement d'effluent vers au moins l'éjecteur susdit ;
b) l'amenée par le conduit d'amenée et par au moins l'éjecteur précité d'un fluide de traitement d'effluent efficace pour réduire les polluants dans ledit effluent ; et
c) l'amenée d'un support et d'un fluide d'atomisation par le conduit d'atomisation précité pour injecter le fluide de traitement d'effluent susdit dans le passage d'effluent précité.

2. Procédé suivant la revendication 1, dans lequel le fluide de traitement d'effluent comprend comme additif de l'urée, de l'ammoniac ou un hydrocarbure azoté en des quantités suffisantes pour former un rapport molaire de l'azote dans le fluide de traitement aux oxydes d'azote dans l'effluent susdit d'environ 1/10 à environ 5/1.

3. Procédé suivant la revendication 1, dans lequel le fluide de traitement d'effluent comprend comme additif un hydrocarbure en des quantités suffisantes pour former un rapport pondéral de l'hydrocarbure dans le fluide de traitement aux oxydes d'azote dans l'effluent susdit d'environ 0,5/1 à environ 25/1.

4. Procédé suivant l'une quelconque des revendications 1 à 3, dans lequel au moins l'éjecteur précité (42) est agencé en amont de l'ajutage (41) à une distance égale pouvant atteindre trente deux fois le diamètre intérieur du conduit d'atomisation (40).

5. Procédé suivant l'une quelconque des revendications 1 à 4, dans lequel au moins l'éjecteur (42) précité est agencé en amont de l'ajutage (41) à une distance égale à environ cinq à environ seize fois le diamètre intérieur du conduit d'atomisation (40).

6. Procédé suivant l'une quelconque des revendications 1 à 5, dans lequel le conduit d'amenée (30) est coaxial au conduit d'atomisation (40).

7. Procédé suivant l'une quelconque des revendications 1 à 6, dans lequel le fluide de traitement d'effluent est amené dans au moins l'éjecteur (42) précité à une vitesse d'environ 2 à environ 60 pieds par seconde (environ 0,61 à environ 18,3 m/s).

8. Procédé suivant l'une quelconque des revendications 1 à 7, dans lequel il y a deux ou plusieurs de ces éjecteurs (42) localisés de telle sorte que les courants du fluide de traitement passant par lesdits éjecteurs viennent se frapper mutuellement.

9. Procédé suivant l'une quelconque des revendications 1 à 8, dans lequel au moins l'éjecteur précité (42) a un diamètre d'environ 1/32 à 1/4 pouce (environ 0,8 à environ 6,35 mm).

10. Procédé suivant l'une quelconque des revendications 1 à 9, dans lequel le fluide d'atomisation comprend de la vapeur ou de l'air et dans lequel le fluide d'atomisation est amené à une vitesse d'environ 200 à environ 800 pieds par seconde (environ 61 à environ 244 m/s).

11. Procédé suivant l'une quelconque des revendications 1 à 10, dans lequel le fluide d'atomisation est amené à une vitesse suffisante pour effectuer l'atomisation du fluide de traitement précité.
